**Europäisches Patentamt**

**European Patent Office**

**Office européen des brevets**

(19)

(11) Veröffentlichungsnummer: **0 194 273**
**B1**

(12) # EUROPÄISCHE PATENTSCHRIFT

(45) Veröffentlichungstag der Patentschrift:
03.08.88

(51) Int. Cl.⁴: **G 03 B 33/00**, G 03 C 5/16

(21) Anmeldenummer: 85904238.4

(22) Anmeldetag: 31.08.85

(86) Internationale Anmeldenummer:
PCT/DE 85/00303

(87) Internationale Veröffentlichungsnummer:
WO 86/01913 (27.03.86 Gazette 86/7)

(54) **VERFAHREN ZUM ERKENNEN VON WACHSTUMSSCHÄDIGUNGEN AN PFLANZEN.**

(30) Priorität: 10.09.84 DE 3433190

(43) Veröffentlichungstag der Anmeldung:
17.09.86 Patentblatt 86/38

(45) Bekanntmachung des Hinweises auf die Patenterteilung:
03.08.88 Patentblatt 88/31

(84) Benannte Vertragsstaaten:
AT BE CH DE FR GB IT LI LU NL SE

(56) Entgegenhaltungen:
EP - A - 0 070 680
US - A - 3 715 962
US - A - 4 037 048

Scientific American, vol. 218, no. 1, January 1968, R.
Colwell: "Remote sensing of natural resources", pp.
54-69
Photogrammetric Engineering and Remote Sensing,
vol. 48, no. 11, November 1981, T. Lillesand et al.:
"Evaluation of digital photographic enhancement for
dutch Elm disease detection", pp. 1581-1592
Telcom Report, vol. 4, no. 3, June 1981, Passau, (DE), E.
Henning: "Elektronische Bildverarbeitung in der
Reproduktionstechnik", pp. 259-263

(73) Patentinhaber: HAYDN, Rupert,
Hohenstaufenstrasse 10, D-8000 München 40 (DE)

(72) Erfinder: HAYDN, Rupert, Hohenstaufenstrasse 10,
D-8000 München 40 (DE)

(74) Vertreter: Seibert, Rudolf, Dipl.-Ing.,
Tattenbachstrasse 9, D-8000 München 22 (DE)

## Beschreibung

Die vorliegende Erfindung bezieht sich auf ein Verfahren zum Erkennen von Stresserscheinungen und/oder Wachstumsschädigungen an Pflanzen, insbesondere am Baumbestand durch farbiges Fotografieren der bepflanzten Regionen oder Teilen davon und optisches Auswerten der Farbfotografien.

Für Vermessungszwecke aber auch für Bodenuntersuchungen und im militärischen Bereich ist die Erstellung von Luftaufnahmen in Falschfarbe — sog. Falschfarbaufnahmen — bekannt geworden. Diese Falschfarbaufnahmen entstehen dadurch, dass der für die Aufnahme eingesetzte Film durch ein im Vergleich zum sichtbaren Licht versetzten Frequenzband, im übrigen ebenfalls in drei Schichten wie bei einer Farbfotografie, sensibilisiert wird, wobei eine Schicht durch reflektierte Infrarot-Strahlen und die anderen beiden Schichten durch Rot und Grün beeinflusst werden.

Diesem Verfahren liegt die Erkenntnis zugrunde, dass die Wiedergabe auf einem derartigen Bild, auf welchem die grünen Pflanzen aufgrund der Reflexion in Infrarot-Bereich Rot bis Tiefrot erscheinen, Stresserscheinungen oder Wachstumsschädigungen an Pflanzen bei genauer Untersuchung erkennen lassen, weil die Reflexion von IR-Strahlen von gesunden Pflanzen konzentrierter und intensiver ist als bei geschädigten Pflanzen.

Eine unmittelbare optische Auswertung eines Falschfarbenbildes zur Erkennung der genannten Schädigungen an Bäumen ist aber, insbesondere wenn die einzelnen Bäume in urbanen Regionen verstreut sind, aus verschiedenen Gründen nicht möglich. So können vom Auge geringe Farbnuancen im Rotbereich nur sehr schwer unterschieden werden, wobei für Vergleiche das menschliche Auge auch wenig geeignet ist, einen bestimmten Farbton in allen Einzelheiten so zu speichern, dass beim anschliessenden Betrachten eines anderen Punktes nicht mit ausreichender Sicherheit gesagt werden kann, ob der entsprechende Punkt heller, dunkler, intensiver eingefärbt oder weniger intensiv eingefärbt usw. ist oder nicht.

In Verbindung mit der Erkennung von Wachstumsschäden an Ulmen ist ein digital arbeitendes photographisches Verfahren bekanntgeworden, mit dem die krankhaften Unterschiede in den Kronen der Ulmen optisch verstärkt werden (Photogrammetric Engineering and Remote Sensing, Vol. 48, No. 11, Nov. 81, pp. 1581-1592).

Hierzu wird von dem zu betrachtenden Objekt eine Infrarotaufnahme erstellt, Farbauszüge erstellt und punktweise hinsichtlich der Helligkeit ausgewertet und die Auswertergebnisse punktweise zu einem sichtbaren Bild zusammengesetzt, dessen Helligkeit im wesentlichen der Helligkeit des aufgenommenen Bildes und dessen Farbton aus dem Verhältnis von Rot- und Grünanteilen im aufgenommenen Bild gebildet ist.

Aufgabe der Erfindung ist es, das bekannte spezielle Auswerteverfahren so weiterzubilden, dass die optische Auswertung vereinfacht und beim Betrachten des fertigen Bildes ohne weitere Hilfe der Zustand der Bepflanzung erkannt werden kann.

Diese Aufgabe wird mit einem Verfahren mit den Merkmalen des Patentanspruches 1 gelöst. Vorteilhafte Weiterbildungen und Ausgestaltungen ergeben sich aus den Unteransprüchen.

Bei dem Verfahren nach der Erfindung wird also wie beim vorbekannten Verfahren die Existenz eines Falschfarbenbildes mit Farbwiedergabe aus Lichtreflexion im Infrarotbereich vorausgesetzt, d.h., sofern ein solches Bild vorhanden ist, kann es unmittelbar eingesetzt und, wenn nicht, muss es, vorzugsweise in Form einer Luftaufnahme, erstellt werden.

Auch von diesem Bild werden, wie beispielsweise auch vom Mehrfarbendruck bekannt, Farbauszüge in den drei Farben, Blau, Grün, Rot erstellt, wobei jeder einzelne Farbauszug in den entsprechenden Bildpunkten den im Falschfarbenbild enthaltenen Farbanteil nach Intensität und Sättigung ausweist.

Die so gewonnenen drei Farbauszüge werden dann wie beim vorbekannten Verfahren zur Erstellung eines für die optische Auswertung zu dem genannten Zweck geeigneten Bildes nicht nur hinsichtlich jedes einzelnen Bildpunktes so zueinander in Relation gebracht, dass einmal ein Bildpunkt entsteht, dessen Farbintensität im wesentlichen der Farbintensität auf dem Falschfarbenbild entspricht, sondern jeder Bildpunkt wird auch aus dem Verhältnis der Farbintensität des Farbauszuges für die Farbe Rot zu der Intensität der Farbe des Farbauszuges für die Farbe Grün derart gebildet, dass bei stark überwiegendem Rotanteil in dem Auswertbild Grün erscheint, während bei anderen Verhältnissen eine nach Rot bzw. Blau gehende Farbe gewählt ist.

Die Sättigung des wiederzugebenden Farbpunktes wird gemäss der Erfindung dabei aus dem Verhältnis von Rot- und Blauanteil derart abgeleitet, dass einem erhöhten Blauanteil eine geringere Sättigung zugeordnet wird und umgekehrt.

Die so ermittelten Werte werden erfindungsgemäss dann zur Wiedergabe des endgültigen Bildes verwendet, auf welchem dann bei den zu kontrollierenden Pflanzen von Grün, d.h. absolut gesunden Pflanzen über Leicht- und Tiefrot eingefärbte Pflanzen, d.h. stressunterliegende bzw. leicht wachstumsgeschädigte Pflanzen bis zum Absterben verurteilte Pflanzen wiedergegeben werden. Letztere werden in der Farbe Blau wiedergegeben.

Die optische Auswertung ist nunmehr, da ja die geringfügigen Rotnuancen im Falschfarbenbild an sich die Grundinformation über den Zustand der Bepflanzung enthalten, optisch sehr einfach möglich.

Praktische Versuche haben gezeigt, dass gem. einer Weiterbildung der Erfindungsvorschlages zur Wiedergabe der Farbintensität auf dem endgültigen Bild eine Ableitung des Intensitätswertes allein vom Farbauszug für die Farbe Rot des Falschfarbenbildes genügt, da die beiden anderen Farbauszüge in aller Regel sehr viel geringere Farbintensitäten aufweisen.

Für die Wiedergabe des fertigen Bildes empfiehlt es sich noch gem. einer anderen Weiterbildung des Erfindungsgedankens den den einzelnen Punkten zuzuordnenden Farbton für den optischen Betrachter dadurch zu optimieren, dass zunächst empirisch die für einen bestimmten Zustand der wiederzugebenden Pflanzen aus der Infrarotreflektion wiedergegebene Rotnuance einem bestimmten Farbton zugeordnet und diese Zuordnung tabellarisch bzw. in einem Histogramm festgehalten wird, um bei der späteren Entwicklung dieser Farbnuance durch Vergleich der Intensität des Rotanteils und der Intensität des Grünanteils die für den Betrachter günstige Farbfrequenz wiederzugeben.

Die vorstehenden Ausführungen werden im folgenden unter Bezugnahme auf das als Zeichnung anliegende Ablaufdiagramm zusammengefasst.

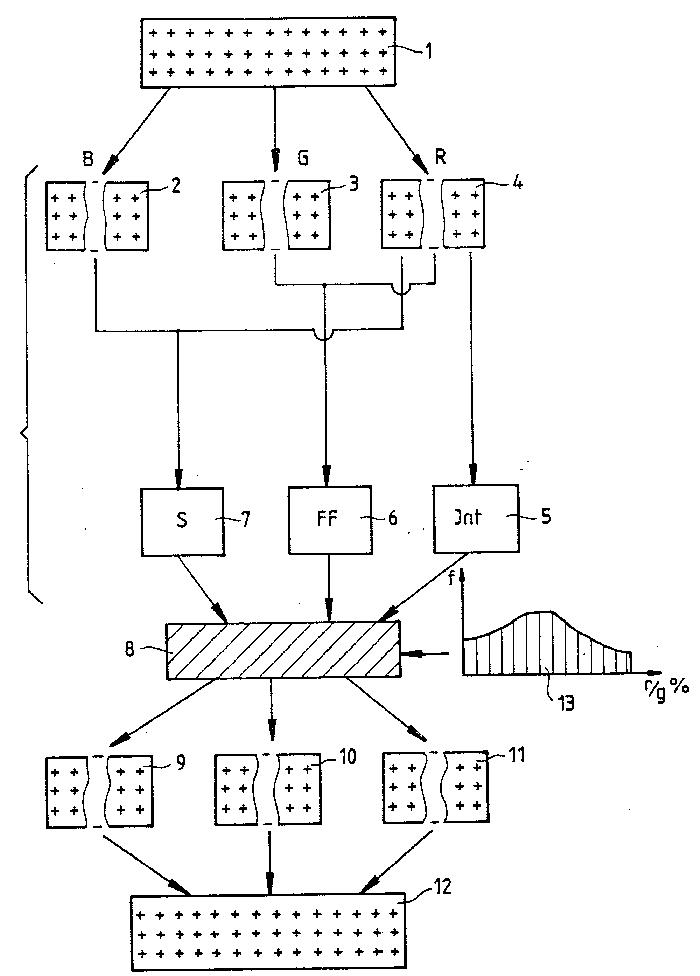

In der Zeichnung ist zunächst mit 1 ein Falschfarbenbild bezeichnet, das für die Realisierung des Verfahrens nach der Erfindung entweder eigens erstellt oder aber für einen vorgegebenen Bereich bereits vorhanden ist.

Durch die auf diesem Bild eingezeichneten Punkte wird demonstriert, dass jeder einzelne Punkt dieses Falschfarbenbildes abgetastet und ausgewertet werden soll, wobei diese Abtastung und Auswertung in an sich bekannter Weise analog der Erstellung der Klischees eines Mehrfarbendruckes oder aber auch mit modernen Scannern, die Punkt für Punkt das Bild abtasten, erfolgen kann.

Das Falschfarbenbild enthält eine Wiedergabe der auf dem Film festgehaltenen Strahlen im Grün-, Rot- und IR-Rot-Bereich.

Aus diesem Falschfarbenbild werden dann die 3 Farbauszüge 2, 3, 4 erstellt, nämlich 2 mit der Grundfarbe Blau = B,

3 mit der Grundfarbe Grün = G,

4 mit der Grundfarbe Rot = R.

Aus diesen Farbauszügen wird dann einmal für jeden Farbpunkt die Farbintenstät abgeleitet und unter entsprechender Zuordnung des Farbpunktes in einem Speicher 5 = INT (Intensität) gespeichert, während im Speicher 6 die auf dem wiederzugebenden Bild gewünschte Farbe (Farbfrequenz = FF) als Quotient der Intensität der Farbe Rot im Farbauszug 4 und der Farbe Grün im Farbauszug 3 festgehalten wird.

Ausserdem wird die Sättigung der wiederzugebenden Farbe im Speicherteil 7 (Sättigung = S) festgehalten, wobei der Wert der Sättigung aus dem Quotient der Farbintensitäten aus dem Farbauszug für Rot 4 und dem Farbauszug für Blau 2 gewonnen wird derart, dass ein geringerer Blauanteil zu einer grösseren Sättigung der später wiederzugebenden Farbe führt und umgekehrt.

Die so durch Abtasten ermittelten Werte werden in einer Prozessoreinheit 8 zur Erstellung von Teilbildern 9, 10, 11 verarbeitet, wobei das Teilbild 9 den Blauanteil nach Intensität und Sättigung, das Teilbild 10 den Grünanteil nach Intensität und Sättigung und das Teilbild 11 den Rotanteil nach Intensität und Sättigung für das endgültige Auswertebild 12 erhält. Das Auswertebild 12 würde dann nach Art der Farbfotografie, des Mehrfarbendruckes oder auch der Mehrfarbendarstellung auf Bildschirm entsprechend erstellt.

Dem Prozessor 8 ist ein Histogramm 13 zugeordnet, das ein optimiertes Farbfrequenz-Zuordnungs-Polygon enthält. Aus diesem Histogramm entnimmt der Prozessor zu dem ermittelten Quotienten aus Farbintensität Rot und Farbintensität Grün eine den optischen Bedürfnissen angepasste Frequenz für die wiederzugebende Farbe. Diese Frequenz wird dann, wie beschrieben, unter Berücksichtigung der Farbsättigung und der gewünschten Farbintensität so aufgespalten, dass die 3 Teilbilder 9, 10, 11 unmittelbar erstellt werden können.

Der vorstehend erläuterte Verfahrensablauf wurde nur in den für das Verständnis des Verfahrens notwendigen Schritten erläutert. Für den Fachmann ist dabei ersichtlich, dass einzelne Schritte, beispielsweise die Erstellung des Farbauszuges unter gleichzeitiger Messung von Sättigung, Quotient von Farbintensitäten und die Intensität des Rotanteiles selbst, wie durch die Klammer 14 angedeutet in einem Verarbeitungsgerät unmittelbar zusammengefasst werden können. In jedem Fall muss das Verfahren aber, um die gewünschte Spreizung der Farbnuancen im Rotbereich des Falschfarbenbildes zu erreichen, die Quotientenbildung aus Rot- und Grünanteilen einerseits sowie die Quotientenbildung aus Rot- und Blauanteil realisieren und daraus die Zuordnung einer konkret wiederzugebenden Frequenz, die dann ihrerseits die Aufteilung auf die Teilbilder ermöglicht, aufweisen. Dabei müssen natürlich die einzelnen Teilbilder nicht als reale Unterlagen erstellt, sondern das endgültige Bild kann in an sich bekannter Weise unmittelbar vom Prozessor fotomechanisch oder auch elektronisch erstellt werden. Auch die Zuordnungswerte für die wiederzugebende Farbfrequenz kann auch in anderer Weise als über ein Histogramm erfolgen.

## Patentansprüche

1. Verfahren zum Erkennen von Stresserscheinungen und/oder Wachstumschädigungen an Pflanzen, insbesondere am Baumbestand durch farbiges Fotografieren der Pflanzenregionen oder Teilen davon und Auswerten der Farbfotografie, wobei

a) von der Region bzw. den Teilen zunächst eine Farbaufnahme (1) in Falschfarbe mit Farbwiedergabe im Infrarotbereich erstellt,

b) von dieser Aufnahme Farbauszüge (2, 3, 4) hergestellt und

c) die Werte der einzelnen Farbpunkte der Farbauszüge zur Wiedergabe entsprechend angeordneter Farbpunkte in einem entsprechenden Bild (12) verwendet werden, wobei

d1) die Helligkeit des wiederzugebenden Farbpunktes im wesentlichen der Helligkeit des entsprechenden Farbpunktes auf dem Falschfarbenbild (1) entspricht; und

d2) der Farbton aus dem Verhältnis von Rot- und Grünanteilen im Falschfarbenbild (1) abgeleitet wird,

dadurch gekennzeichnet, dass die Sättigung aus dem Verhältnis von Rot- und Blauanteil des Falschfarbenbildes (1) derart abgeleitet wird, dass einem erhöhten Blauanteil eine geringere Sättigung zugeordnet wird und umgekehrt.

2. Verfahren nach Anspruch 1, dadurch gekennzeichnet, dass die Helligkeit für jeden abzubildenden Punkt von der Helligkeit des den Rotanteil wiedergebenden Farbauszuges (4) des Falschfarbenbildes (1) allein abgeleitet wird.

3. Verfahren nach Anspruch 1, dadurch gekennzeichnet, dass zur Ermittlung des Farbtons der wiederzugebenden Farbe zunächst der Quotient aus Intensität von Rot- und Grünanteil des Falschfarbenbildes gebildet und diesem Wert ein empirisch nach Optimierungsgrundsätzen für die optische Auswertung ermittelter Farbton zugeordnet wird.

4. Verfahren nach Anspruch 3, dadurch gekennzeichnet, dass der dem wiederzugebenden Farbpunkt zuzuordnende Farbton einem nach Optimierungsgrundsätzen aufgebauten Histogramm (13) entnommen ist.

## Claims

1. A method of detecting stress phenomena and/or growth impairment of plants, in particular tree stock, by taking colour photographs of the plant regions or parts thereof and analysing the colour photograph, wherein:

a) initially a false colour image (1) of the region or the parts is produced with colour reproduction in the infra-red range;

b) from this image selected colour extracts (2, 3, 4) are then produced;

c) the values of the individual colour points of these colour extracts are then used to reproduce correspondingly arranged colour points in a corresponding composite image (12); wherein:

d1) the brightness of the colour point which is to be reproduced corresponds fundamentally to the brightness of the corresponding colour point in the false colour image (1); and

d2) the colour tone is derived from the ratio of red and green components in the false colour image (1),

characterised in that the saturation is derived from the ratio of the red and blue components of the false colour image (1) in such manner that a high level blue component is assigned a low level saturation and vice versa.

2. A method as claimed in Claim 1, characterised in that the brightness for each point which is to be reproduced is derived solely from the brightness of the colour extract (4) reproducing the red component of the false colour image (1).

3. A method as claimed in Claim 1, characterised in that the colour tone of the colour which is to be reproduced is determined by first forming the quotient of the intensity of the red and green components of the false colour component and this value is assigned a colour tone determined empirically for the optical analysis in accordance with optimisation principles.

4. A method as claimed in Claim 3, characterised in that the colour tone to be assigned to the colour point which is to be reproduced is obtained from a histogram (13) constructed in accordance with optimisation principles.

## Revendications

1. Procédé pour identifier des phénomènes de stress et/ou des anomalies de croissance de plantes, notamment dans le peuplement forestier, grâce à la prise de photographies en couleurs des régions où se situent ces plantes ou de parties de ces régions et grâce à l'évaluation de la photographie en couleurs, et selon lequel

a) on établit tout d'abord un enregistrement en couleurs (1) de la région ou des parties de la région, avec de fausses couleurs avec reproduction des couleurs dans la gamme infrarouge,

b) on établit à partir de cet enregistrement, des composantes chromatiques (2, 3, 4), et

c) on utilise les valeurs des différents points colorés des composantes chromatiques pour la reproduction de points colorés disposés de façon correspondante dans une image correspondante (12), auquel cas

d1) la luminosité du point coloré devant être reproduit correspond sensiblement à la luminosité du point coloré correspondant situé sur l'image en fausses couleurs (1); et

d2) la teinte est obtenue à partir du rapport des composantes de rouge et de vert dans l'image en fausses couleurs (1),

caractérisé par le fait que la saturation est dérivée du rapport des composantes de rouge et de bleu de l'image en fausses couleurs (1) de telle sorte qu'une saturation plus faible est associée à une composante intensifiée de bleu et inversement.

2. Procédé suivant la revendication 1, caractérisé par le fait que la luminosité pour chaque point, dont l'image doit être formée, est dérivée uniquement de la luminosité de la composante chromatique (4), reproduisant la composante de rouge, de l'image en fausses couleurs (1).

3. Procédé suivant la revendication 1, caractérisé par le fait que, pour la détermination de la composante chromatique de la couleur devant être reproduite, on forme tout d'abord le quotient entre les intensités des composantes de rouge et de vert de l'image en fausses couleurs et on associe à cette valeur une teinte déterminée de façon empirique en fonction de lois d'optimisation pour l'évaluation optique.

4. Procédé suivant la revendication 2, caractérisé par le fait que la teinte devant être associée au point coloré devant être reproduit est prélevée d'un histogramme (13) établi conformément à des lois d'optimisation.